# EUROPEAN PATENT APPLICATION

(11) **EP 2 052 958 A1**
(43) Date of publication of application: **29.04.2009**
(21) Application number: 08006141.9
(22) Date of filing: 28.03.2008
(51) Int. Cl.: B62M 9/12

(54) **Bicycle gearshift**

(30) Priority: 25.10.2007 IT MI20072062
(71) Applicant: CAMPAGNOLO S.r.l., 36100 Vicenza (VI) (IT)
(72) Inventor: Valle, Maurizio, 36100 Vicenza (IT); Pasqua, Paolo, 36043 Camisano Vicentino (Vicenza) (IT)
(74) Representative: Castiglia, Paolo

(57) **Abstract**

The invention relates to a bicycle gearshift (20), comprising a support member (22) intended to be mounted on a bicycle frame, a thrusting member of a bicycle chain and at least one articulation arm (28) to movably connect said thrusting member to said support member (22), said at least one articulation arm (28) being connected to at least one member (22) of said support member and said thrusting member so that it can rotate about a respective rotation axis (30a) through at least one respective connecting pin (40a) extending along.said rotation axis (30a); at least one first rolling element (54) is operatively arranged in the radial direction between said at least one connecting pin (40a) and one (28) of said at least one articulation arm and said at least one member of said support member and said thrusting member.

## Description

The present invention relates to a bicycle gearshift.

The invention also relates to a bicycle comprising the aforementioned gearshift. Preferably, the aforementioned bicycle is a racing bicycle and the aforementioned gearshift is a motorised gearshift.

As known, a bicycle is a mechanical vehicle moved by muscular driving force that is transmitted to the rear "driving" wheel through a motion transmission system. The motion transmission system comprises a pair of crank arms, on which the cyclist exerts a propulsive thrust, one or more driving toothed wheels, made to rotate by direct coupling with the crank arms, and one or more driven toothed wheels or "sprockets", made to rotate by the driving toothed wheels through a chain, said sprockets being coupled with the hub of the rear wheel.

In particular, the racing bicycles comprise a plurality of sprockets of various diameters and a plurality of driving toothed wheels, also of various diameters. The chain simultaneously engages with a driving toothed wheel and a sprocket and is selectively movable over them through a front gearshift and a rear gearshift, so as to obtain the combination of driving toothed wheel and sprocket that offers the most favourable transmission ratio for the conditions of the route.

The front gearshift is mounted on the seat post tube of the bicycle frame near to the plurality of driving toothed wheels and moves the chain from one driving toothed wheel. to another. The rear gearshift is mounted on a portion of the bicycle frame near to the plurality of sprockets and moves the chain from one sprocket to another.

In the prior art, the front and rear gearshifts are made according to an articulated quadrilateral arrangement formed by a support member, intended to remain fixed with respect to the frame, a chain thrusting member, typically known as chain guide, and a pair of articulation arms to movably connect the chain guide to the support member. In particular, each articulation arm is rotatably connected to the support member and to the chain guide through respective pins inserted in respective holes. The pins are generally fixed to the support member and to the chain guide, whereas the holes are made on the articulation arm. In order to allow the relative rotation, the aforementioned pin-hole couplings have a certain clearance.

The actuation of the gearshift can be manual or motorised.

In manually-actuated gearshifts, the chain guide is generally connected to a control cable that is pulled by the cyclist to move the chain guide in a predetermined direction, generally away from the longitudinal median plane of the bicycle, towards the driving toothed wheels or the sprockets with a smaller diameter. In order to move the chain guide in the opposite direction to the one of pulling the control cable, a counteracting spring is provided that thrusts the chain guide in the opposite direction when the cable is loosened. The balance between tension of the cable and thrusting of the spring keeps the chain guide in a stable position at the driving toothed wheel or at the desired sprocket.

The spring also has a further effect, which is that of keeping the components of the articulated quadrilateral in abutment against one another eliminating the clearances between such components. This is necessary since a clearance, even a small one, close to the support member would be amplified due to the length of the articulation arms till a substantial positioning error of the chain guide is generated. Basically, thanks to the aforementioned spring, it is possible to ensure a sufficient precision of gearshifting.

The Applicant has found that the bicycle gearshifts just described have the drawback that the aforementioned pin-hole couplings are subject to wearing phenomena due to the relative sliding between pin and hole, with consequent difficulties in the relative rotation of the articulation arms with respect to the support member and the chain guide. Such wear is accentuated by the presence of the spring that, by thrusting the components of the articulated quadrilateral against one another, causes an increase in friction in the relative sliding of the aforementioned components. The aforementioned difficulties in the relative rotation of the components of the articulated quadrilateral slow down the speed of gearshifting and can also lead to jamming of the gearshift or even the chain falling off, losing its engagement with the driving toothed wheels and with the sprockets.

Positioning errors of the chain guide can also occur in gearshifts with motorised actuation due to possible clearances in the pin-hole couplings and problems of wear due to the relative sliding between pin and hole.

The technical problem at the basis of the present invention is to provide a bicycle gearshift with high reliability and precision of gearshifting, so as to overcome in a simple and effective manner the aforementioned drawbacks with reference to the prior art.

The present invention therefore relates, in a first aspect thereof, to a bicycle gearshift, comprising a support member intended to be mounted on a bicycle frame, a thrusting member of a bicycle chain and at least one articulation arm to movably connect said thrusting member to said support member, said at least one articulation arm being connected to at least one member of said support member and said thrusting member so that it can rotate around a respective rotation axis through at least one respective connecting pin extending along said rotation axis, characterised in that it comprises at least one first rolling element operatively arranged in the radial direction between said at least one connecting pin and one of said at least one articulation arm and said at least one member of said support member and said thrusting member.

Throughout the present description and in the subsequent claims, by "rolling element" it is meant any element that can rotate around at least one rotation axis. For example, such an element can be a ball, a cylinder or a cone.

Moreover, throughout the present description and in the subsequent claims, by "radial direction" it is meant a direction substantially perpendicular to the rotation axis of the connecting pin between articulation arm and support member or thrusting member, whereas by "axial direction" it is meant a direction substantially parallel to the aforementioned rotation axis.

Advantageously, the interposition in the radial direction of a rolling element between the connecting pin of the articulation arm and the support member and/or between the connecting pin of the articulation arm and the thrusting member ensures that the friction during the rotation of the articulation arm with respect to the support member and/or the thrusting member is reduced with respect to that of the pin-hole coupling of the prior art, since in the gearshift of the present invention there is a rolling contact instead of sliding contact.

A further advantage correlated to the use of the rolling element is that the radial clearance between the articulation arm and the other member is eliminated.

The operating condition that is created is therefore optimal since it gives the cyclist an immediate feeling of operation both precise, due to the absence of clearance, and fast and light, due to the low friction. Moreover, with the gearshift of the present invention risks of jamming or delay in gearshifting, due to difficulties of relative rotation between the articulation arm and the support member and/or the thrusting member, are also avoided.

In an embodiment of the gearshift of the present invention, the aforementioned connecting pin is associated with the support member and/or with the thrusting member and the aforementioned rolling element is arranged between the connecting pin and the articulation arm.

In this case, the connecting pin can be made in one piece with the support member and/or the thrusting member, or alternatively it can be removably associated with the support member and/or the thrusting member.

In a further embodiment of the gearshift of the present invention, the connecting pin is associated with the articulation arm and the aforementioned rolling element is arranged between the connecting pin and the support member and/or the thrusting member.

Also in this case, the connecting pin can be made in one piece with the support member and/or the thrusting member, or alternatively it can be removably associated with the support member and/or the thrusting member.

Preferably, the articulation arm and the support member and/or the thrusting member rest directly on one another in the axial direction.

Advantageously, the resting in the axial direction eliminates the axial clearance that there may have been due to the fact that the resting in the radial direction is carried out through the aforementioned rolling element.

Even more advantageously, the resting in the axial direction determines a particularly low friction since, due to the main thrusting direction of the gearshift on the chain, the load in the articulation points, especially in the case of an articulated quadrilateral arrangement, is mostly radial with respect to the rotation axes of the components in relative motion. Therefore, even in the worst conditions of contact, there is low friction in the axial direction due to the low axial loads.

More preferably, the articulation arm and the support member and/or the thrusting member rest on one another in the axial direction through the interposition of at least one second rolling element.

In this way, also the friction in the axial direction is avoided, so that the risk of jamming or slowing down gearshifting is drastically reduced.

In a preferred embodiment of the gearshift of the present invention, it comprises at least one setting device to exert a preloading in the axial direction on the articulation arm and on the support member and/or the thrusting member.

In this way, it is advantageously possible to completely recover the axial clearances due to the use of the rolling element acting in the radial direction, by simply thrusting firstly the two components of the gearshift in relative rotation, i.e. the articulation arm and the support member or the articulation arm and the thrusting member, one towards the other, or one away from the other.

Preferably, the gearshift of the present invention also comprises at least one elastic element operatively arranged between the articulation arm and the support member and/or the thrusting member, to exert a biasing in axial direction.

Such an elastic element allows the preloading thrust on the components of the gearshift in relative rotation to be better adjusted and allows early wearing of the relative coupling or jamming in rotation to be avoided.

The position of the aforementioned elastic element can be different. In particular, the aforementioned elastic element can be arranged between the rolling element acting in the radial direction and the articulation arm, or between the rolling element acting in the radial direction and the support member and/or the thrusting member.

In the case in which the rolling element acting in the axial direction is also provided, the aforementioned elastic element can be arranged between the rolling element acting in the radial direction and the rolling element acting in the axial direction, or between the rolling element acting in the axial direction and the articulation arm, or else between the rolling element acting in the axial direction and the support member and/or the thrusting member.

Preferably, the aforementioned elastic element comprises a disc spring, but it is possible to provide elastic means of a different type to perform the same function, like for example rubber pads.

In a preferred embodiment of the gearshift of the present invention, the connecting pin is rigidly fixed to the support member and/or to the thrusting member.

In this case, the connecting pin can be screwed into a threaded cavity of the support member and/or the thrusting member, or else, for example when the component onto which the pin has to be screwed is made from composite material, in a threaded cavity of a metallic insert associated with the support member and/or the thrusting member.

Advantageously, the mutual axial position between connecting pin and support member and/or thrusting member (or between connecting pin and insert) is adjustable through screwing of the pin in the cavity suitably provided in the support member and in said thrusting member (or in the insert).

In a preferred embodiment of the gearshift of the present invention, the rolling element acting in the radial direction is in a radial bearing.

Throughout the present description and in the subsequent claims, by "radial bearing" it is meant any type of bearing capable of supporting a load orientated in the radial direction with respect to the rotation axis thereof. Moreover, by "axial bearing" it is meant any type of bearing capable of supporting a load orientated in the axial direction with respect to the rotation axis thereof. For example, both purely radial or axial bearings, i.e. that supporting loads orientated just radially or axially, and bearings capable of supporting both types of load, like for example oblique bearings, are covered by the aforementioned definitions.

In the case in which the gearshift of the present invention comprises a radial bearing, it has an inner ring fitted onto the connecting pin and an outer ring associated on the inside of a cavity formed in the articulation arm or in the support member and/or thrusting member.

Preferably, the connecting pin comprises a head in axial abutment against the inner ring of the radial bearing.

In this way, the connecting pin, through its screwing into the cavity provided on the articulation arm or on the support member and/or thrusting member, acts as a setting device to exert the preload in the axial direction on the articulation arm and on the support member and/or thrusting member.

Indeed, during the screwing of the pin, the two components of the gearshift connected through the pin are pulled towards one another until they abut. Further screwing of the pin leads to the radial bearing being loaded and the axial clearances being completely eliminated.

In the case in which the rolling element acting in the axial direction is also provided, it is preferably comprised in an axial bearing.

More preferably, the axial bearing is operatively arranged between the outer ring of the radial bearing and the articulation arm or the support member and/or thrusting member.

Even more preferably, the axial bearing has a first ring adjacent to the radial bearing mounted with clearance on the connecting pin and a second ring opposite the aforementioned first ring mounted with clearance on the articulation arm or on the support member and/or thrusting member.

In this way sliding contacts between the components in relative rotation are completely avoided, and therefore friction is avoided.

In a further embodiment of the gearshift of the present invention, the rolling element acting in the radial direction and the rolling element acting in the axial direction are comprised in a single bearing having a double row of rolling elements.

In a further embodiment thereof, the gearshift of the present invention comprises circumferential pathways formed on the connecting pin and on the articulation arm or on the support member and/or thrusting member for the rolling of the rolling element acting in the radial direction.

In addition or alternatively, the gearshift of the present invention also comprises further circumferential pathways formed on the articulation arm and on the support member and/or thrusting member for the rolling of the rolling element acting in the axial direction.

In a preferred embodiment thereof, the gearshift of the present invention comprises two articulation arms and the rolling element acting in the radial direction is coupled with the articulation arm which is closest to a bicycle frame when the gearshift is associated with the frame.

Preferably, moreover, the aforementioned rolling element is coupled with the aforementioned articulation arm at a portion of the articulation arm which is axially farthest away from a thrusting portion of the thrusting member of the bicycle chain.

In this way, the point of articulation between support member and articulation arm where the rolling element acting in the radial direction is provided is the one which is farthest away from the thrusting portion of the thrusting member of the chain, for which reason a recovery of the clearance in this point of articulation is particularly advantageous for the correct positioning of the thrusting member, thus achieving a high precision of gearshifting.

Preferably, the gearshift of the present invention is a motorised gearshift.

In a second aspect thereof, the present invention relates to a bicycle comprising a gearshift of the type described above.

Preferably, such a bicycle has, individually or in combination, all of the structural and functional characteristics discussed above with reference to the aforementioned gearshift and therefore has all of the aforementioned advantages.

Further characteristics and advantages of the present invention shall become clearer from the following detailed description of some preferred embodiments thereof, made with reference to the attached drawings and given for indicating and not limiting purposes. In such drawings:
- figure 1 schematically shows a perspective view of a bicycle gearshift according to the present invention;
- figure 2 schematically shows an exploded view of the bicycle gearshift of figure 1;
- figure 3 schematically shows a front elevation view of the gearshift of figure 1;
- figure 4 schematically shows a section view of the gearshift of figure 3, taken according to the plane traced with line IV - IV of figure 3;
- figure 5 schematically shows an enlarged detail of the view of figure 4;
- figures 5A and 6-12 schematically show further embodiments of the gearshift according to the present invention, in respective views analogous to that of figure 5.

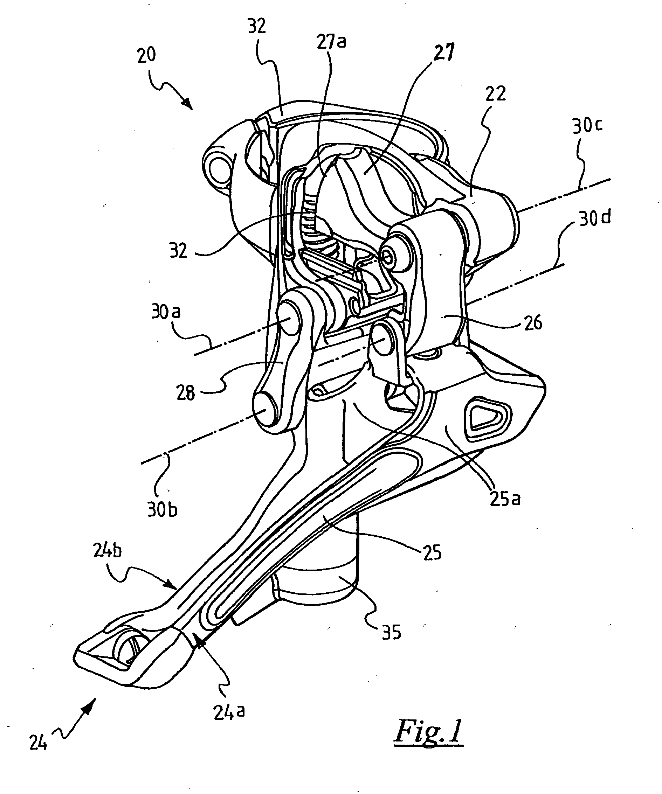

Initially with reference to figures 1-5, a first embodiment of a bicycle gearshift - in particular a front gearshift - in accordance with the present invention is shown, wholly indicated with 20.

The gearshift 20 comprises a support member 22, intended to be fixed to the seat post tube (not illustrated) of the bicycle frame, a thrusting member 24 intended to act by thrusting against the chain of a bicycle (not shown) to move it from a position of engagement with a driving toothed wheel to another (not shown) and shaped for example like a fork, a front articulation arm 26 and a rear articulation arm 28, the front articulation arm 26 being farther away than the rear articulation arm 28 with respect to the median plane of the bicycle frame. The two articulation arms 28 and 26 are rotatably connected to the support member 22 and to the thrusting member 24 at the four articulation axes 30a, 30b, 30c and 30d, respectively, according to an articulated quadrilateral arrangement.

The thrusting member 24 is substantially shaped like a fork. Such a fork is arranged substantially parallel to the median plane of the bicycle frame and is elongated towards the rear end of the bicycle. The thrusting member 24 comprises two plates, front and rear 24a, 24b, the front plate 24a being farther away than the rear plate 24b with respect to the median plane of the bicycle frame. The front plate 24a comprises a thrusting portion 25 of the chain, arranged in a central portion of the plate, or displaced towards the rear end of the bicycle, with respect to the area 25b of connection with the two articulation arms 26 and 28.

The support member 22 preferably comprises a fastening clip 32 intended to be locked around the seat post tube of the bicycle frame. The support member 22 can be made from any material, like for example an aluminium alloy, a composite material or a polymer.

By composite material it is meant a material consisting of at least two components including a polymeric matrix and a filler for example comprising structural fibres, granules or powders. The structural fibres are preferably selected from the group consisting of carbon fibres, glass fibres, aramid fibres, ceramic fibres, boron fibres and combinations thereof. Carbon fibres are particularly preferred. Preferably, the polymeric material is thermosetting and preferably comprises an epoxy resin. However, the use of a thermoplastic material is not excluded.

By structural composite materials it is meant those materials that contain structural fibres with a length of over five millimetres.

By reinforced composite materials, on the other hand, it is meant those materials comprising a polymeric matrix filled with fibres of a length shorter than or equal to five millimetres and/or with powders and/or with granules. The sizes shown refer to the length of the fibre found in a finished piece.

The reinforced composite materials have a structural strength lower than that of the structural composite materials, but in general they are suitable for injection moulding and can be easily worked, which is why they are particularly preferred for manufacturing the support member 22, to which they also give considerable lightness. However, for such a component the use of a simple polymer is not excluded.

The rear articulation arm 28 can in turn be made from the same material as the support member 22 or from a different material, but again preferably selected from a metallic material, like an aluminium alloy, or a composite material.

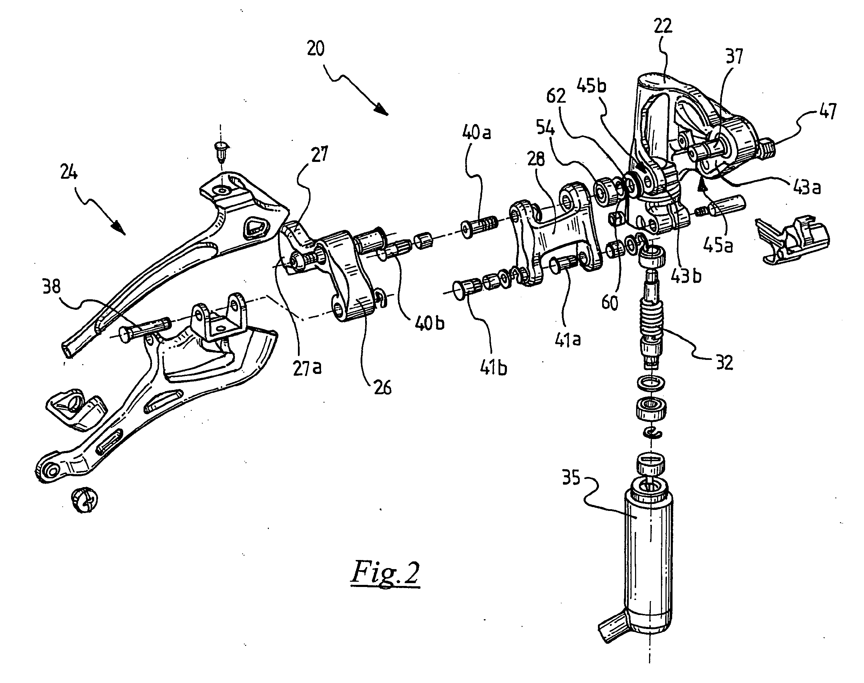

As shown more clearly in figure 2, the gearshift 20 is a so-called motorised gearshift operating according to the principles illustrated in patent n° US 6679797 to the same Applicant, and hereafter schematically set forth. In particular, the support member 22 has a shape adapted to house a worm screw 32 actuated by an electric motor 35. The front articulation arm 26 has an extension 27 ending with an engagement portion 27a carrying a nut screw that engages the worm screw 32. When the worm screw 32, actuated by the electric motor 35, moves the engagement portion 27a of the extension 27, the arm 26 rotates around a connecting pin 37 coaxial to the articulation axis 30c (figure 1) like a lever pivoted at the aforementioned pin 37, causing the thrusting member 24 to move. The thrusting member 24 is in turn fixed to the front arm 26 through a connecting pin 38 coaxial to the articulation axis 30d.

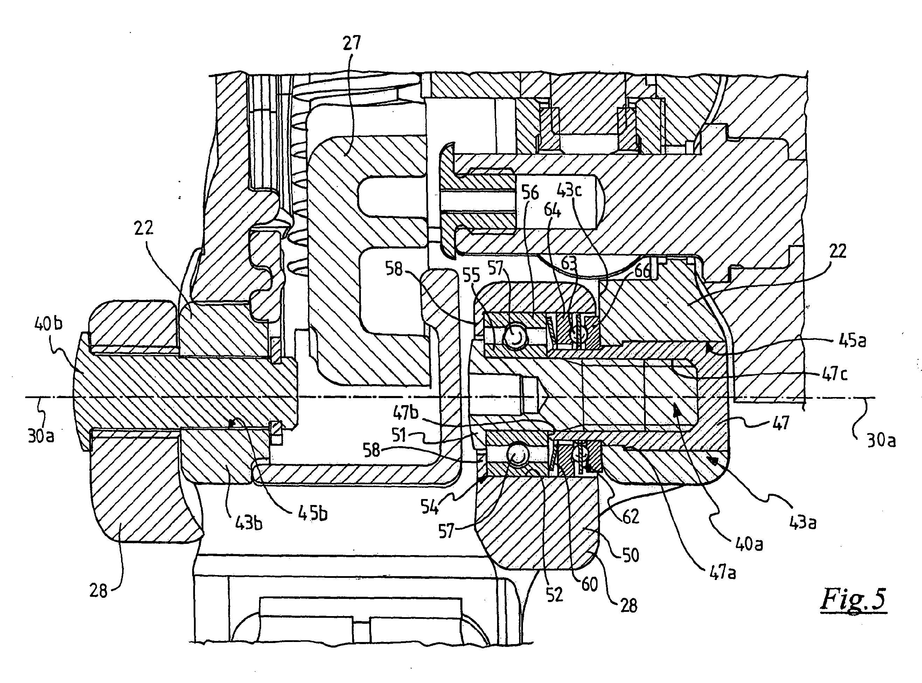

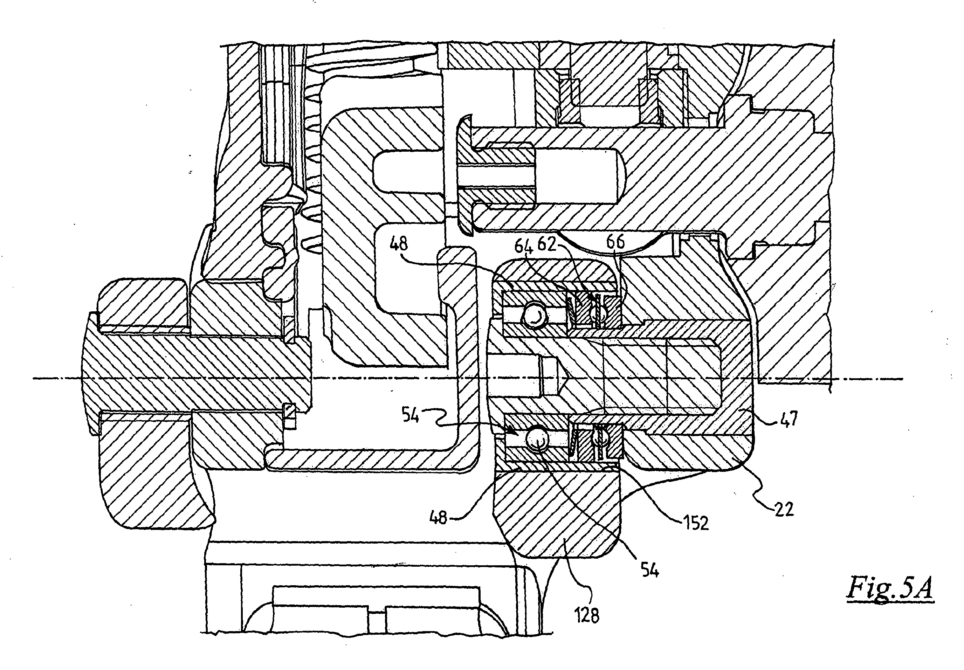

The rear articulation arm 28 limits the possible positions that the thrusting member 24 can take up due to its movement about the articulation axis 30d. In particular, the rear articulation arm 28 is substantially H-shaped and is connected to the support member 22 so that it can rotate around the axis 30a through two coaxial connecting pins 40a and 40b, and to the thrusting member 24 so that it can rotate around the axis 30b through two coaxial connecting pins 41a and 41b. The support member 22 in turn comprises two fins 43a and 43b where the seats 45a and 45b are formed to respectively receive the pins 40a and 40b. In the case in which the support member 22 is made from composite material or from a simple polymer it is preferable to apply an insert 47, having for example a substantially cylindrical shape, with a threaded cylindrical cavity 47c for the screwing of the pin 40a. The insert 47 can be co-moulded, glued, or simply held through a shoulder 47a, as indicated in figure 5. An insert of the aforementioned type can also be provided at the pin 40b.

The pins 40a, 40b, 41a and 41b can be associated with the support member 22, or with the articulation arms 26 and 28, or some pins can be associated with the support member 22 and the others with the articulation arms 26 and 28.

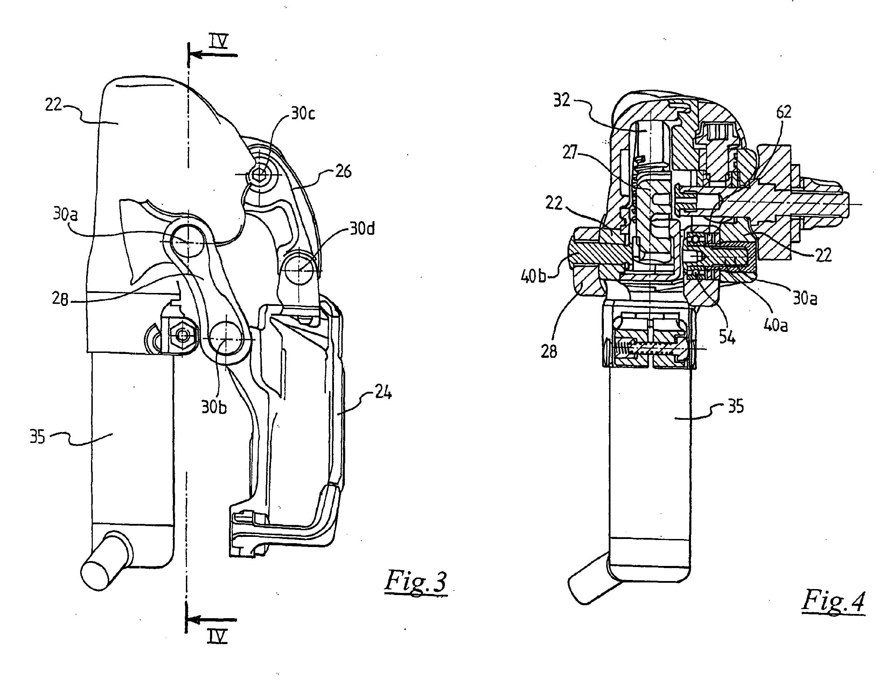

Figure 3 shows the gearshift of figure 1 in a front elevation view so that it is evident the articulated quadrilateral arrangement where the support member 22, the thrusting member 24 and the two articulation arms 26 and 27 are the sides of the quadrilateral and the axes 30a, 30b, 30c and 30d are the articulation axes. The section of figure 4, and in greater detail the enlargement of figure 5, show the coupling between the rear articulation arm 28 and the support member 22.

With particular reference to figure 5, it should be observed that the end 50 of the rear articulation arm 28 comprises a seat 52 shaped like a circular through hole, facing the seat 45a of the fin 43a. A radial bearing 54 is inserted with pressure in the seat 52. In particular, the bearing 54 is inserted from the side of the seat 52 facing the seat 45a (right side with reference to figure 5) until a shoulder 58 of the seat 52 is reached. Such a direct coupling is advantageously able to be made in the case in which the articulation arm 28 is made from metallic material.

In the embodiment of figure 5A, the arm 128, analogous to the arm 28 of the gearshift 20 illustrated in figures 1-5, is made from composite material. In this case, it is particularly advantageous to place a metallic insert 48, for example made from aluminium alloy or steel, between the seat 52 and the bearing 54.

In figure 5A, structural elements that are identical or equivalent from the functional point of view to those of the gearshift 20 of figures 1-5 are indicated with the same reference numerals.

In particular, the insert 48 has a substantially annular shape and is glued inside a through hole 152 of the arm 128. Alternatively, the insert 48 is co-moulded with the arm 128, inside one of the through holes 152 thereof.

The radial bearing 54 has, on the left side with reference to figure 5, the outer ring 56 in abutment against the shoulder 58 of the seat 52, and the inner ring 55 in abutment against a head 51 of the pin 40a, such a head 51 being partially inserted in the seat 52.

Vice-versa, on the right side with reference to figure 5, the inner ring 55 is in abutment against a side end 47b of the insert 47 (or alternatively against the support member 22), so that it is completely immobilised with respect to the pin 40a.

The outer ring 56 is in abutment against the support member 22, but with the interposition of a disc spring 60 and an axial bearing 62, mounted in a radially outer position on the insert 47.

The bearing 62 is given an axial preloading determined by the screwing up to a predetermined depth of the pin 40a in the insert 47, and by the bias exerted by the compression of the disc spring 60. Of course, a man skilled in the art will understand that any elastic means can be used instead of the disc spring 60, for example an elastic rubber pad.

The radial bearing 54 can comprise rolling elements of any type: in figures 4 and 5 balls 57 are illustrated, but the use of cylindrical rollers or cones is not excluded. The same goes for the rolling elements 63 of the axial bearing 62.

The axial bearing 62 has the function of allowing the outer ring 56 of the radial bearing 54 to be rested against the support member 22 without generating friction in rotation. In this way, the axial bearing 62 provides a support that prevents the clearances of the radial bearing 54 due to the axial movement of the ring 56 on the rolling elements 57.

In order to operate as well as possible without adding friction, the ring 64 of the axial bearing 62 axially closest to the radial bearing 54 is mounted with clearance with respect to the pin 40a (and to the insert 47), whereas the opposite ring 66 is mounted with clearance with respect to the inner surface of the seat 52 of the rear articulation arm 28 (or else, in the case of figure 5A, the opposite ring 66 is mounted with clearance with respect to the inner surface of the insert 48).

The ring 66 of the axial bearing 62 is mounted in abutment on a side surface 43c of the fin 43a facing the articulation arm 28.

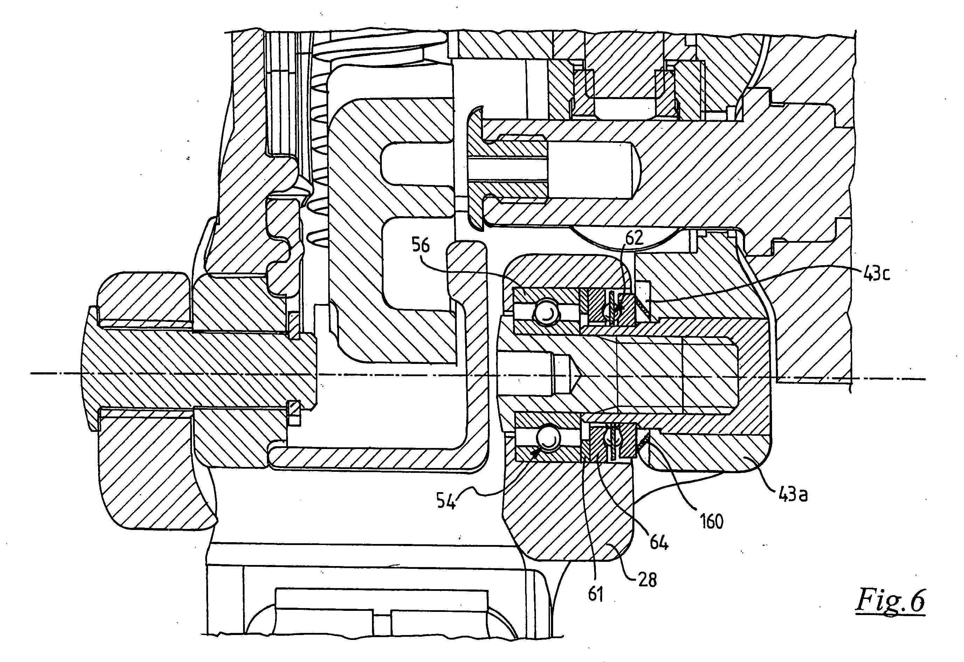

Figure 6 shows a second embodiment of the bicycle gearshift of the invention. In such a figure 6, structural elements that are identical or equivalent from the functional point of view to those of the gearshift 20 described above with reference to figures 1-5 shall be indicated with the same reference numerals and they shall not be described any further.

In particular, this second embodiment of the gearshift of the invention differs from the first embodiment of the gearshift 20 in that the disc spring 160 is arranged between the axial bearing 62 and the support member 22, whereas the outer ring 56 of the radial bearing 54 and the ring 64 of the axial bearing 62 are in abutment through the interposition of a spacer ring 61 (or possibly directly).

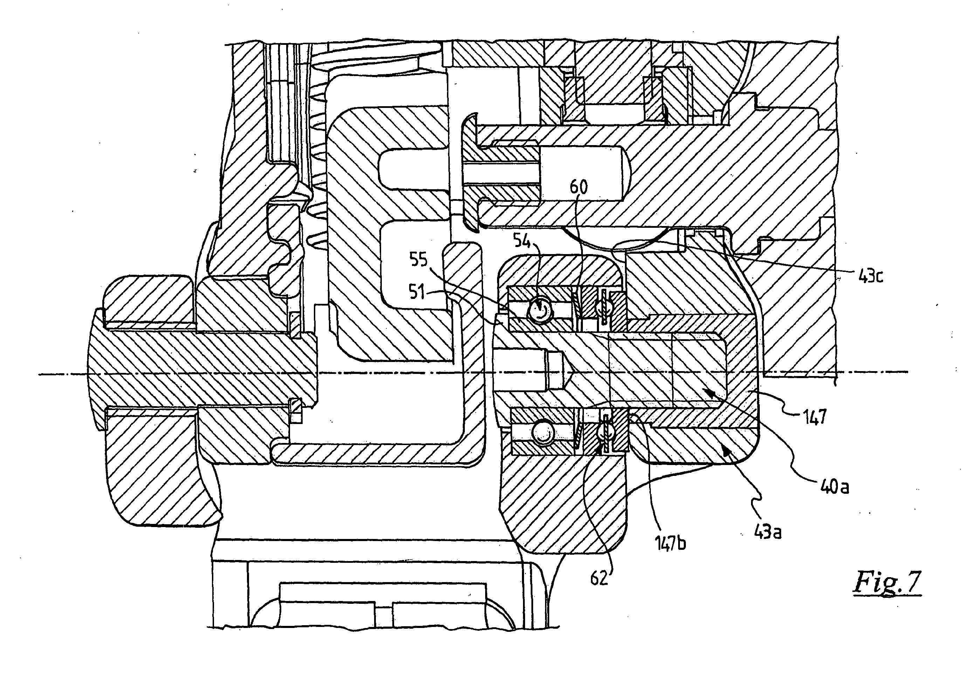

Figure 7 shows a third embodiment of the bicycle gearshift of the invention. In such a figure 7, structural elements that are identical or equivalent from the functional point of view to those of the gearshift 20 described above with reference to figure 1-5 shall be indicated with the same reference numerals and they shall not be described any further.

In particular, this third embodiment of the gearshift of the invention differs from the first embodiment of the gearshift 20 in that the inner ring 55 of the radial bearing 54 is not blocked between the head 51 of the pin 40a and the side end 147b of an insert 147, analogous to the insert 47 of the gearshift 20 illustrated in figures 1-5. In this case, however, the side end 147b is aligned with the side surface 43c of the fin 43a facing the articulation arm 28. The disc spring 60 and the axial bearing 62 are mounted in a radially outer position on the pin 40a and the ring 66 of the axial bearing 62 is mounted in abutment on the side surface 43c of the fin 43a and on the side end 147b of the insert 147. In this case, the preloading of the bearing 54 is adjusted by screwing the pin 40a in the insert 147 and by the disc spring 60.

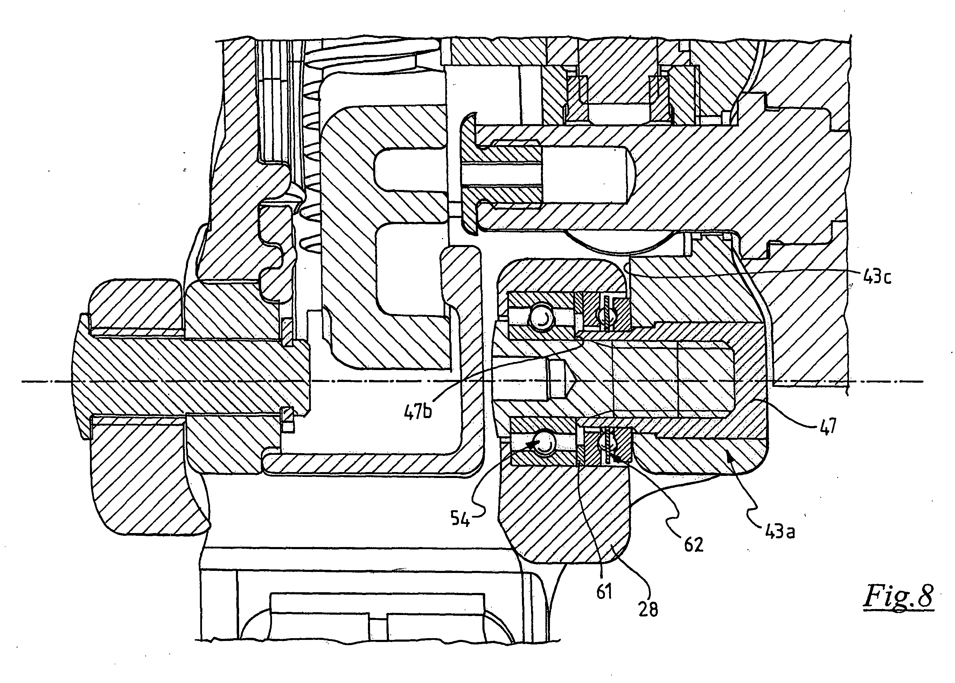

Figure 8 shows a fourth embodiment of the bicycle gearshift of the invention. In such a figure 8, structural elements that are identical or equivalent from the functional point of view to those of the gearshift 20 described above with reference to figures 1-5 shall be indicated with the same reference numerals and they shall not be described any further.

In particular, this fourth embodiment of the gearshift of the invention differs from the first embodiment of the gearshift 20 in that the disc spring 60 between the radial bearing 54 and the axial bearing 62 has been omitted. Moreover, the outer ring 56 of the radial bearing 54 and the ring 64 of the axial bearing 62 are in abutment through the interposition of a spacer ring 61. In this case it is however necessary to take particular care of the axial preloading that, by screwing the pin 40a, is applied directly on the bearings 54 and 62.

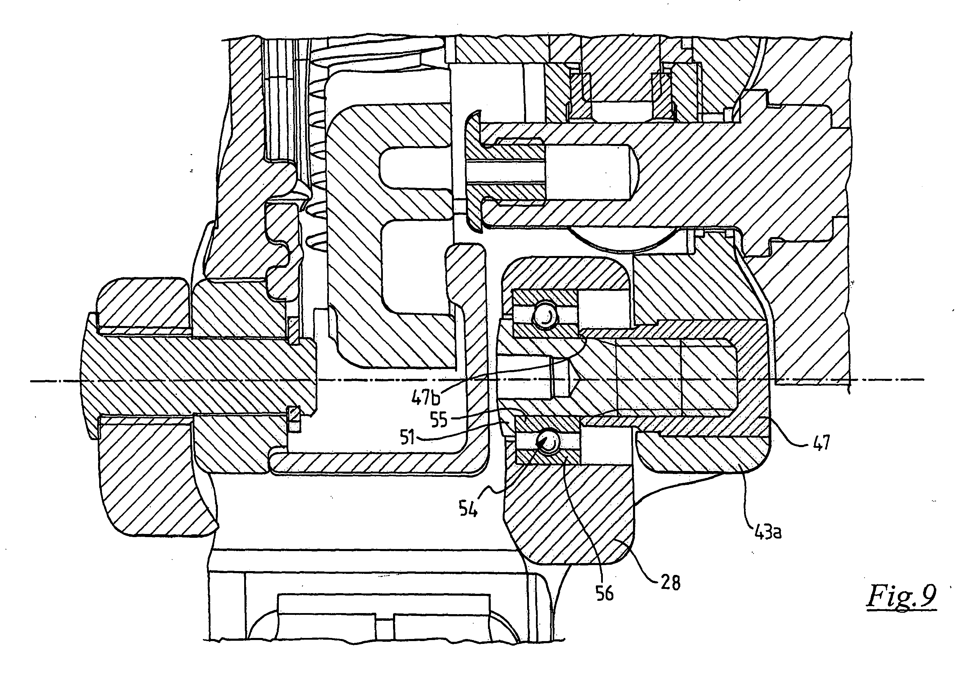

Figure 9 shows a fifth embodiment of the bicycle gearshift of the invention. In such a figure 9, structural elements that are identical or equivalent from the functional point of view to those of the gearshift 20 described above with reference to figures 1-5 shall be indicated with the same reference numerals and they shall not be described any further.

In particular, this fifth embodiment of the gearshift of the invention differs from the first embodiment of the gearshift 20 in that the disc spring 60 and also the axial bearing 62 have been omitted. In practice, it is provided just the radial bearing 54, which has the inner ring 55 locked between the head of the pin 51 and the side end 47b of the insert 47, whereas the outer ring 56 is rigidly fixed to the rear articulation arm 28.

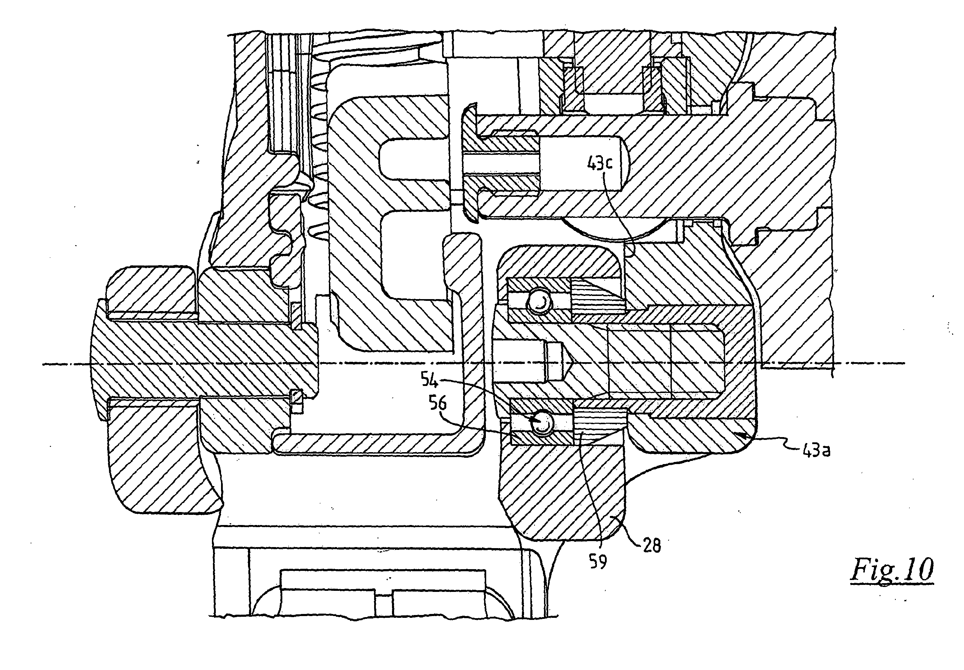

Figure 10 shows a sixth embodiment of the bicycle gearshift of the invention. In such a figure 10, structural elements that are identical or equivalent from the functional point of view to those of the gearshift described above with reference to figure 9 shall be indicated with the same reference numerals and they shall not be described any further.

In particular, this sixth embodiment of the gearshift of the invention differs from the embodiment of figure 9 in that an elastic pad 59, for example made from rubber, has been added between the radial bearing 54 and the side surface 43c of the fin 43a facing the articulation arm 28, to absorb axial loads and to provide a support for the total elimination of also the axial clearances.

The pad 59, of annular shape, is mounted outside the insert 47 and the radial extension thereof decreases as it moves towards the fin 43a.

The sliding friction between the pad 59 and the outer ring 56 in the usual operating conditions is relatively low since the contact surface is limited and the load transmitted by the thrusting member is mainly directed in the radial direction.

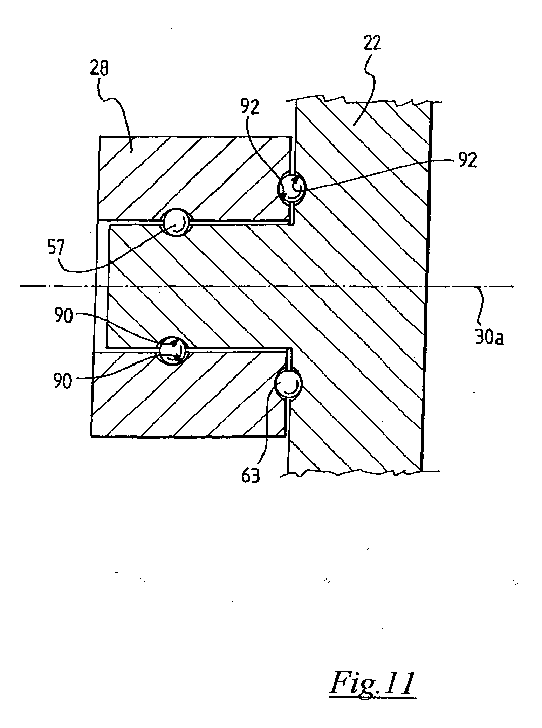

Figure 11 shows a seventh embodiment of the bicycle gearshift of the invention. In such a figure 11, structural elements that are identical or equivalent from the functional point of view to those of the gearshift 20 described above with reference to figure 1-5 shall be indicated with the same reference numerals and they shall not be described any further.

In particular, this seventh embodiment of the gearshift of the invention differs from the first embodiment of the gearshift 20 in that the bearings 54 and 62 with rings for the radial and axial supports are respectively replaced by the rolling elements 57 and 63 arranged between the support member 22 and the articulation arm 28. Such rolling elements 57 and 63 slide on respective circumferential pathways 90 and 92 made on the two components 22 and 28.

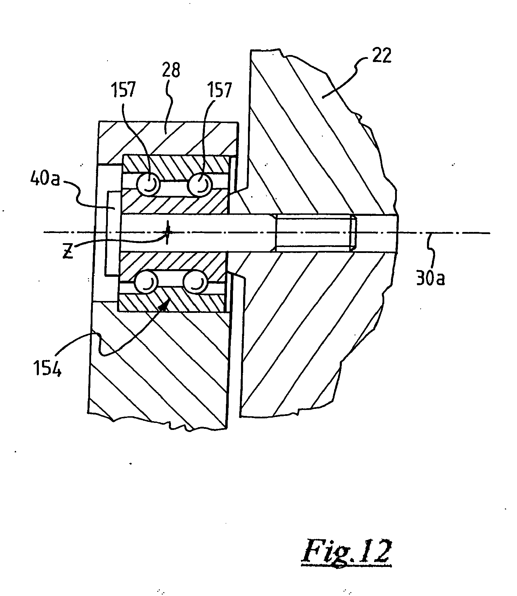

Figure 12 shows an eighth embodiment of the bicycle gearshift of the invention. In such a figure 12, structural elements that are identical or equivalent from the functional point of view to those of the gearshift 20 described above with reference to figure 1-5 shall be indicated with the same reference numerals and they shall not be described any further.

In particular, this eighth embodiment of the gearshift of the invention differs from the first embodiment of the gearshift 20 substantially in that the radial bearing 54 and the axial bearing 62 are replaced by a single bearing 154, which has the functional characteristics of the two bearings 54 and 62. In particular, the bearing 154 comprises a double row of balls 157 that simultaneously provides support both in the radial and axial direction, and in any case prevents the bearing 154 from pitching, i.e. from rotating about an axis Z perpendicular to the axis 30a.

In this embodiment, the pin 40a is directly screwed into the support member 22 without interposition of the insert 47.

Although the invention has up to now been described and illustrated with reference to a front gearshift of a bicycle, the man skilled in the art shall understand that it can also be easily applied to a rear gearshift obtaining the same advantages.

Moreover, although the invention has been described with reference to a motorised gearshift, the man skilled in the art shall understand that it can also be easily applied to a manual gearshift.

Moreover, although the invention has been described and illustrated with reference just to the articulation between the support member 22 and the rear articulation arm 28, it can be applied to any pair of components free to rotate with respect to one another about a common axis and belonging to the articulated quadrilateral formed by the support member 22, the thrusting member 24, the front articulation arm 26 and the rear articulation arm 28.

Of course, a man skilled in the art can bring numerous modifications and variants to the bicycle gearshift described above, in order to satisfy specific and contingent requirements, all of which are in any case covered by the scope of protection of the present invention as defined by the following claims.

For example, the shape and the number of bearings used in the bicycle gearshift of the invention can be whatever, within limits that respect the functional characteristics indicated above.

## Claims

1. Bicycle gearshift (20), comprising a support member (22) intended to be mounted on a bicycle frame, a thrusting member (24) of a bicycle chain and at least one articulation arm (26, 28) to movably connect said thrusting member (24) to said support member (22), said at least one articulation arm (26, 28) being connected to at least one member of said support member (22) and said thrusting member (24) so that it can rotate around a respective rotation axis (30a, 30b, 30c, 30d) through at least one respective connecting pin (37, 38, 40a, 40b, 41a, 41b) extending along said rotation axis (30a, 30b, 30c, 30d), **characterised in that** it comprises at least one first rolling element (57) operatively arranged in the radial direction between said at least one connecting pin (37, 38, 40a, 40b, 41a, 41b) and one of said at least one articulation arm (26, 28) and said at least one member of said support member (22) and said thrusting member (24).

2. Gearshift (20) according to claim 1, wherein said at least one connecting pin (37, 38, 40a, 40b, 41a, 41b) is associated with said at least one member of said support member (22) and said thrusting member (24), and said at least one first rolling element (57) is arranged between said at least one connecting pin (37, 38, 40a, 40b, 41a, 41b) and said at least one articulation arm (26, 28).

3. Gearshift (20) according to claim 2, wherein said at least one connecting pin (37) is made in one piece with said at least one member (22) of said support member and said thrusting member.

4. Gearshift (20) according to claim 2, wherein said at least one connecting pin (37, 38, 40a, 40b, 41a, 41b) is removably associated with said at least one member of said support member (22) and said thrusting member (24).

5. Gearshift (20) according to claim 1, wherein said at least one connecting pin (37, 38, 40a, 40b, 41a, 41b) is associated with said at least one articulation arm (26, 28) and said at least one first rolling element (57) is arranged between said at least one connecting pin (37, 38, 40a, 40b, 41a, 41b) and said at least one member of said support member and said thrusting member.

6. Gearshift according to claim 5, wherein said at least one connecting pin is made in one piece with said at least one articulation arm.

7. Gearshift (20) according to claim 5, wherein said at least one connecting pin (37, 38, 40a, 40b, 41a, 41b) is removably associated with said at least one articulation arm (26, 28).

8. Gearshift (20) according to any one of the previous claims, wherein said at least one articulation arm (26, 28) and at least one member of said support member (22) and said thrusting member (24) rest directly on one another in the axial direction.

9. Gearshift (20) according to any one of claims 1 to 7, wherein said at least one articulation arm (26, 28) and at least one member of said support member (22) and said thrusting member (24) rest on one another in the axial direction through the interposition of at least one second rolling element (63).

10. Gearshift (20) according to any one of the previous claims, comprising at least one setting device (51) to exert a preloading in the axial direction on said at least one articulation arm (26, 28) and said at least one member of said support member (22) and said thrusting member (24).

11. Gearshift (20) according to any one of the previous claims, comprising at least one elastic element (59, 60, 160) operatively arranged between said at least one articulation arm (26, 28) and said at least one member of said support member (22) and said thrusting member (24), to exert a biasing in the axial direction on said at least one articulation arm (26, 28) and said at least one member of said support member (22) and said thrusting member (24).

12. Gearshift (20) according to claim 11, wherein said at least one elastic element (59, 60, 160) is arranged between said at least one first rolling element (57) and said at least one articulation arm (26, 28) or said at least one member of said support member (22) and said thrusting member (24).

13. Gearshift (20) according to claim 12 when depending on claim 9, wherein said at least one elastic element (60) is arranged between said at least one first rolling element (57) and said at least one second rolling element (63).

14. Gearshift (20) according to claim 11 when depending on claim 9, wherein said at least one elastic element (160) is arranged between said at least one second rolling element (63) and said at least one articulation arm (26, 28) or said at least one member of said support member (22) and said thrusting member (24).

15. Gearshift (20) according to any one of claims from 11 to 14, wherein said at least one elastic element (60, 160) comprises a disc spring.

16. Gearshift (20) according to claim 2, wherein said at least one connecting pin (37, 38, 40a, 40b, 41a, 41b) is rigidly fixed to said at least one member of said support member (22) and said thrusting member (24).

17. Gearshift (20) according to claim 16, wherein said at least one connecting pin (40a, 41b) is screwed into at least one threaded cavity of said at least one member of said support member (22) and said thrusting member (24).

18. Gearshift (20) according to claim 16, wherein said at least one connecting pin is screwed into at least one threaded cavity (47c) of at least one insert (47, 147) associated with said at least one member of said support member (22) and said thrusting member (28).

19. Gearshift (20) according to any one of the previous claims, wherein said at least one first rolling element (57) is in a radial bearing (54).

20. Gearshift (20) according to claim 19, wherein said radial bearing (54) has a inner ring (55) fitted onto said at least one connecting pin (37, 38, 40a, 40b, 41a, 41b) and an outer ring (56) associated on the inside of at least one cavity (52) of said at least one articulation arm (26, 28) or of said at least one member of said support member (22) and said thrusting member (24).

21. Gearshift (20) according to claim 20, wherein said at least one connecting pin (37, 38, 40a, 40b, 41a, 41b) comprises a head (51) in axial abutment against said inner ring (55) of said radial bearing (54).

22. Gearshift (20) according to claim 9, wherein said at least one second rolling element (63) is comprised in an axial bearing (62).

23. Gearshift (20) according to claims 20 and 22, wherein said axial bearing (62) is operatively arranged between the outer ring (56) of said radial bearing (54) and one of said at least one articulation arm (26, 28) and said at least one member of said support member (22) and said thrusting member (24).

24. Gearshift (20) according to claim 22 or 23, wherein said axial bearing (62) has a first ring (64) adjacent to the radial bearing (54) mounted with clearance on said at least one connecting pin (37, 38, 40a, 40b, 41a, 41b) and a second ring (66) opposite said first ring (64) mounted with clearance on said at least one articulation arm (26, 28) or on said at least one member of said support member (22) and said thrusting member (24).

25. Gearshift (20) according to any one of the previous claims when depending on claim 9, wherein said at least one first rolling element (57) and said at least one second rolling element (63) are comprised in a single bearing (154) having a double row of rolling elements (157).

26. Gearshift (20) according to any one of claims from 1 to 18, comprising first circumferential pathways (90) formed on said at least one connecting pin (37, 38, 40a, 40b, 41a, 41b) and on said at least one articulation arm (26, 28) or at least one member of said support member (22) and thrusting member (24), for the rolling of said at least one first rolling element (57).

27. Gearshift (20) according to any one of claims from 1 to 21 or according to claim 26, comprising second circumferential pathways (92) formed on said at least one articulation arm (37, 38, 40a, 40b, 41a, 41b) and on said at least one member of said support member (22) and thrusting member (24), for the rolling of said at least one second rolling element (63).

28. Gearshift (20) according to any one of the previous claims, comprising two articulation arms (26, 28), said at least one first rolling element (57) being coupled with the articulation arm (28) which is closest to a bicycle frame when the gearshift (20) is associated with the frame.

29. Gearshift (20) according to claim 28, wherein said at least one first rolling element (57) is coupled with said articulation arm (28) at a portion of said articulation arm (28) which is axially farthest away from a thrusting portion (25) of said thrusting member (24).

30. Gearshift according to any one of the previous claims, wherein said gearshift is a motorised gearshift (20).

31. Gearshift according to any one of claims from 1 to 29, wherein said gearshift is a manually actuated gearshift.

32. Bicycle comprising a gearshift (20) according to any one of the previous claims.
